# EUROPÄISCHE PATENTSCHRIFT

(11) **EP 0 834 238 B1**
(45) Veröffentlichungstag und Bekanntmachung des Hinweises auf die Patenterteilung: **12.12.2001**
(21) Anmeldenummer: 96917355.8
(22) Anmeldetag: 08.06.1996
(51) Int. Cl.: H04Q 11/04, H04L 29/06

(54) **VERFAHREN UND VORRICHTUNG ZUR ÜBERTRAGUNG VON VERTRAULICHEN VERBINDUNGSAUFBAU- UND SERVICEINFORMATIONEN ZWISCHEN TEILNEHMERSEITIGEN ENDEINRICHTUNGEN UND EINER ODER MEHREREN DIGITALEN VERMITTLUNGSSTELLEN**
PROCESS AND DEVICE FOR TRANSMITTING CONFIDENTIAL CONNECTION AND SERVICE INFORMATION BETWEEN SUBSCRIBER TERMINALS AND ONE OR MORE DIGITAL EXCHANGES
PROCEDE ET DISPOSITIF POUR LA TRANSMISSION D'INFORMATIONS CONFIDENTIELLES D'ETABLISSEMENT DE CONNEXION ET DE SERVICE ENTRE DES TERMINAUX D'ABONNES ET UN OU PLUSIEURS CENTRES DE COMMUTATION NUMERIQUES

(30) Priorität: 13.06.1995 DE 19521485
(43) Veröffentlichungstag der Anmeldung: 08.04.1998
(73) Patentinhaber: Deutsche Telekom AG, 53113 Bonn (DE)
(72) Erfinder: STOLZ, Helmut, D-57080 Sieben (DE)
(86) Internationale Anmeldenummer: DE9601068
(87) Internationale Veröffentlichungsnummer: WO9642182

(56) Entgegenhaltungen:
- TELESIS, Bd. 16, Nr. 2, 1.Januar 1989, Seiten 42-50, XP000072004 DIFFIE W ET AL: "SECURE CCM"
- INTERNATIONAL SWITCHING SYMPOSIUM 1987, 15. - 20.März 1987, PHOENIX, ARIZONA USA, Seiten 863-869, XP002017713 O'HIGGINS ET AL.: "ENCRYPTION AND ISDN - A NATURAL FIT"
- ADVANCES IN CRYPTOLOGY, SANTA BARBARA, AUG. 16 - 20, 1987, Nr. CONF. 7, 1.Januar 1987, POMERANCE C, Seiten 9-18, XP000130200 PRESTTUN K: "INTEGRATING CRYPTOGRAPHY IN ISDN"
- PROC. 12TH NAT. COMPUTER SECURITY CONF., Oktober 1989, Seiten 305-319, XP002017714 GASSER ET AL.: "THE DIGITAL DISTRIBUTED SYSTEM SECURITY ARCHITECTURE"
- IEEE COMMUNICATIONS MAGAZINE, Bd. 30, Nr. 7, 1.Juli 1992, Seiten 30-35, XP000307910 FORD W ET AL: "PUBLIC-KEY CRYPTOGRAPHY AND OPEN SYSTEMS INTERCONNECTION"

## Beschreibung

Die Erfindung betrifft ein Verfahren zur Übermittlung von vertraulichen und authentischen Verbindungsaufbau- und/oder Serviceinformationen zwischen teilnehmerseitigen Endeinrichtungen und einer oder mehreren Vermittlungsstellen eines digitalen Kommunikationsnetzes, insbesondere ein ISDN-Netz, gemäß Anspruch 1 sowie eine Vorrichtung zur Übertragung von vertraulichen Verbindungsaufbau- und/oder Serviceinformationen gemäß den Ansprüchen 6 und 8.

Es sind digitale Kommunikationsnetze bekannt, die über mehrere Teilnehmeranschlüsse und digitale Vermittlungsstellen verfügen. Da ein Teilnehmeranschluß alle Wahl- und Serviceinformationen unverschlüsselt, d.h. im Klartext, an eine digitale Vermittlungsstelle sendet, können Eindringliche oder sogenannte Lauscher diese vertraulichen Informationen auf den Anschlußleitungen einfach abhören, indem sie sich an verschiedenen Punkten in bestehende Verbindungswege einschalten bzw. auf die bestehenden Verbindungen aufschalten. Hat sich ein Eindringling auf diese Weise erst einmal die Wahl- und Serviceinformationen verschafft, kann er, obwohl er nicht authorisiert ist, die Vermittlungsstelle auf Kosten des Anschlußinhabers benutzen.

In dem Aufsatz "INTEGRATING CRYPTOGRAPHY IN ISDN", erschienen in "ADVANCES IN CRYPTOLOGY; SANTA BARBARA, AUG. 16-20, 1987, Nr. Conf. 7, 1. Januar 1987, Pomerance C, Seiten 9-18, XP000130200" offenbart K. Presttun ein kryptografisch gesichertes ISDN-Kommunikationssytem mit mehreren Datenendeinrichtungen, die über eine Netzabschlußeinrichtung an das ISDN-Netz angeschlossen sind, sowie mit mehreren Vermittlungsstellen, denen eine Authentifikations-Diensteinrichtung zugeordnet ist. In den Datenendeinrichtungen oder der Nettzabschlußeinrichtung ist jeweils ein Sicherheitsmodul implementiert, das lediglich zum Verschlüsseln und Entschlüsseln von Nutzdaten dient, die über den B-Kanal einer ISDN-Verbindung übertragen werden. Der D-Kanal der ISDN-Verbindung wird zur Verteilung von Sicherheitsschlüsseln unter den Datenendeinrichtungen und zum Sicherheitsdienstmanagement benutzt. Die Verschlüsselung von Verbindungsaufbau- und Serviceinformationen ist dort nicht offenbart.

Der Erfindung liegt daher die Aufgabe zugrunde, einen Mißbrauch der Vermittlungsstelle und eine Schädigung des authorisierten Teilnehmeranschluß-Inhabers durch einen nichtberechtigten Eindringling zu erschweren oder sogar völlig zu beseitigen.

Die Erfindung löst diese Aufgabe durch die Schritte des Verfahrensanspruchs 1 sowie durch die Merkmale der Vorrichtungsansprüche 6 und 8.

Die Erfindung ist in einem digitalen Kommunikationsnetz, insbesondere dem ISDN-Netz, verwirklicht. Ein derartiges digitales Kommunikationsnetz umfaßt bekannterweise mehrere Vermittlungsstellen, wenigstens eine beim Teilnehmer installierte Netzabschlußeinrichtung, an die wenigstens eine Datenendeinrichtung, beispielsweise Telefongeräte, Personalcomputer oder Facsimilegeräte, anschaltbar ist. Eine ungewollte Benutzung einer Vermittlungsstelle durch einen Eindringling wird nun dadurch verhindert, daß wenigstens bei einem Inhaber eines Teilnehmeranschlusses wenigstens eine erste Sicherheits-Einrichtung angeordnet ist, daß darüber hinaus in wenigstens einer Vermittlungsstelle wenigstens eine zweite Sicherheit-Einrichtung angeordnet ist, wobei jeweils die erste und zweite, einem bestimmten Teilnehmer zugeordneten Sicherheits-Einrichtungen Verbindungsaufbau- und/oder Serviceinformationen dieses Teilnehmers ver- und/oder entschlüsseln und untereinander über einen gesonderten Steuerkanal des digitalen Kommunikationsnetzes austauschen können. Diese Sicherheits-Einrichtungen weisen je ein Sicherheits-Modul auf, das seinerseits einen Identitätsträger aufnehmen kann.

In jeder Vermittlungsstelle sind anschlußspezifische Baugruppen eingebaut, die je eine zweite Sicherheits-Einrichtung enthalten. Diese Ausführungsform ist jedoch teuer und aufwendig, da die Vermittlungsstellen selbst umgebaut werden müßten.

Ein kostengünstigerer Weg, der mit einem geringeren Aufwand erreichbar ist, besteht darin, ausgehend von bereits vorhandenen digitalen Vermittlungsstellen eine Zusatzeinrichtung zwischen die der Vermittlungsstelle zugeordneten Netzabschlußeinrichtungen und die Vermittlungsstelle zu schalten. In dieser Zusatzeinrichtung ist für jeden zugehörigen Teilnehmeranschluß die entsprechende zweite Sicherheits-Einrichtung angeordnet.

Die erste Sicherheits-Einrichtung eines bestimmten Anschlußinhabers ist zweckmäßigerweise in der dem Teilnehmeranschluß zugeordneten Netzabschlußeinrichtung selbst angeordnet. In diesem Fall genügt eine einzige Sicherheits-Einrichtung, auch wenn der Inhaber eines Teilnehmeranschlusses über einen S₀-Bus bis zu acht Datenendgeräte an die Netzabschlußeinrichtng anschließen kann. Es ist durchaus möglich, jedes Datenendgerät, das einer Netzabschlußeinrichtung zugeordnet ist, mit einer eigenen Sicherheits-Einrichtung auszurüsten. Eine weitere Alternative kann darin bestehen, zwischen jedes Datenendgerät und der zugehörigen Netzabschlußeinrichtung eine Sicherheits-Einrichtung anzuschließen. Es ist jedoch leicht einzusehen, daß die beiden letztgenannten Implementierungsmöglichkeiten aufwendig und teuer sind, da für jedes Datenendgerät eine eigene Sicherheits-Einrichtung erforderlich ist. Die Serviceinformationen können beispielsweise Rufweiterleitungs- und Konferenzschaltungsfunktionen umfassen. Handelt es sich bei dem digitalen Kommunikationsnetz um ein ISDN-Netz, so erfolgt die Übertragung der vertraulichen Informationen zwischen der teilnehmerseitigen ersten Sicherheits-Einrichtung und der der Vermittlungsstelle zugeordneten Sicherheits-Einrichtung über den D-Kanal des ISDN-Netzes. Jeder Identitätsträger kann einen individuellen, auf den Inhaber des Teilnehmeranschlusses bezogenen kryptografischen Schlüssel speichern. Der Identitätsträger kann eine Chipkarte sein, die vom Inhaber eines Teilnehmeranschlusses in das erste Sicherheits-Modul und von einer Bedienperson des Netzbetreibers in das zweite Sicherheits-Modul einführbar sind. Eine zweckmäßige Alternative betrifft ein Software-Modul als Identitätsträger, der austauschbar in das jeweilige Sicherheits-Modul eingesetzt werden kann. Bei einer vorteilhaften Weiterbildung kann die erste, teilnehmerseitige Sicherheits-Einrichtung und die zweite, der Vermittlungsstelle zugeordnete Sicherheits-Einrichtung eine Authentisierung des Teilnehmers gegenüber der Vermittlungsstelle durchführen. Alternativ können für diese Aufgabe separate Authentisierungs-Einrichtungen installiert sein.

Der Schutz der Vermittlungsstelle und des berechtigten Teilnehmeranschluß-Inhabers kann dadurch verbessert werden, daß für eine Benutzer-zu-Benutzer-Kommunikation die einem bestimmten Teilnehmer zugeordnete erste und zweite Sicherheits-Einrichtung alle über den Steuerkanal des digitalen Kommunikations-Netzes zu übertragenden Daten ver- bzw. entschlüsseln können.

Zweckmäßigerweise besitzen die jeweils einem bestimmten Teilnehmer zugeordnete, teilnehmerseitige Sicherheits-Einrichtung und die der Vermittlungsstelle zugewiesene Sicherheits-Einrichtung dieselbe teilnehmerbezogene Identität. Außerdem ver- und/oder entschlüsseln sie die vertraulichen Informationen mit dem gleichen teilnehmerspezifischen Schlüssel.

Die Erfindung wird nachstehend anhand der Ausführungsformen in Verbindung mit den beiliegenden Zeichnungen näher erläutert. Es zeigen:
- Fig. 1: in schematischer Weise einen Ausschnitt eines digitalen Kommunikationsnetzes, das den Verbindungsweg von einem Fernsprechapparat zu einer digitalen Vermittlungsstelle zeigt, in dem die Erfindung verwirklicht ist,
- Fig. 2: eine Ausführungsform, bei der die erfindungsgemäßen Sicherheits-Einrichtungen auf der Seite der Vermittlungsstelle in einer Zusatzeinrichtung eingebaut sind,
- Fig. 3: ein detailliertes Blockschaltbild der Netzabschlußeinrichtung mit der erfindungsgemäßen Sicherheits-Einrichtung,
- Fig. 4: ein detailliertes Blockschaltbild einer anschlußspezifischen Baugruppe der Vermittlungsstelle mit einem eingebauten Sicherheits-Modul, und
- Fig. 5: das Rahmenformat der ISDN-Bitströme.

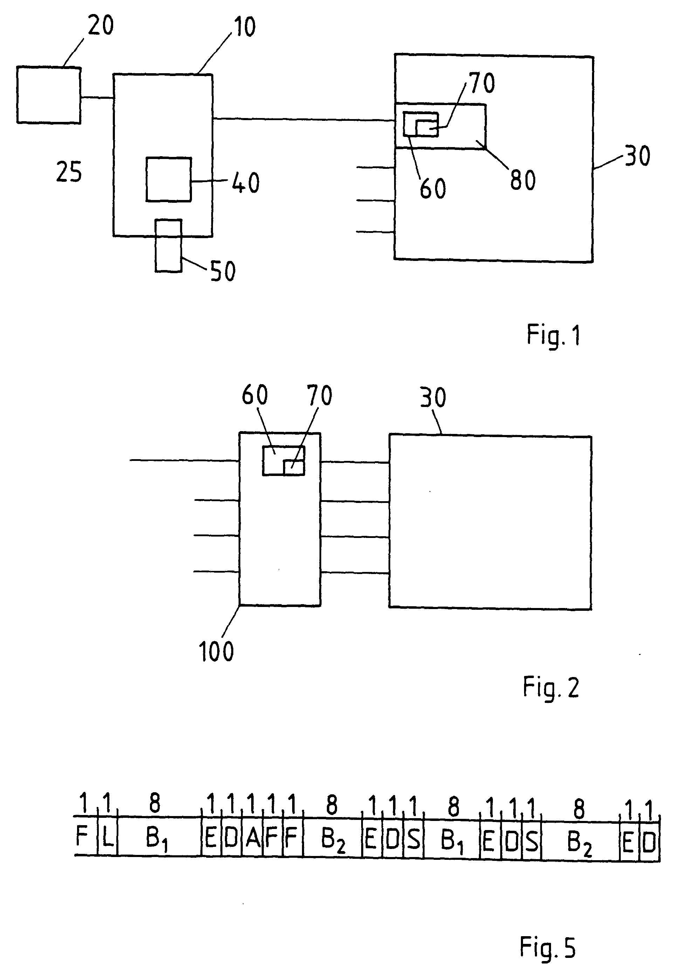

Fig. 1 zeigt in vereinfachter Darstellung einen Teil eines digitalen Kommunikationsnetzes, das für die nachfolgende beispielhafte Beschreibung ein ISDN-Netz sein soll. Teilnehmerseitig ist als Datenendeinrichtung ein Fernsprechapparat 20 dargestellt, der über einen S₀-Bus 25 mit einer Netzabschlußeinrichtung 10 verbunden ist. Die Netzabschlußeinrichtung 10, auch Network Terminator (NT) genannt, kann in dem Gebäude oder Raum eines TeilnehmerAnschluß-Inhabers installiert sein. An den S₀-Bus 25 können bis zu acht Datenendeinrichtungen, wie z.B. weitere Fernsprechapparate 20, Facsimilegeräte oder Personalcomputer, angeschlossen werden. In dem erläuterten Beispiel ist eine erfindungsgemäße, teilnehmerseitige Sicherheits-Einrichtung 40, 50 in die Netzabschlußeinrichtung 10 eingebaut. Die Sicherheits-Einrichtung umfaßt einen teilnehmerspezifischen Identitätsträger. 50 und ein in die Netzabschlußeinrichtung 10 fest installierbares Sicherheits-Modul 40, in das der Identitätsträger 50 eingesetzt werden kann. Bei dem Identitätsträger 50 kann es sich um eine Chipkarte oder um ein Software-Modul handeln. Die Sicherheits-Einrichtung 40, 50 ist derart ausgelegt, daß sie die vertraulichen Verbindungsaufbau- und/oder Serviceinformationen eines bestimmten Teilnehmers mit einem teilnehmerspezifischen oder anschlußspezifischen Schlüssel verschlüsseln kann. Dieser Schlüssel kann in einem Speicherbaustein der Chipkarte des Anschlußinhabers abgelegt sein. Die Netzabschlußeinrichtung 10 ist ausgangsseitig in bekannter Weise über eine verdrillte Zweidraht-Leitung mit einer ihr zugewiesenen ISDN-Vermittlungseinrichtung 30 verbunden. Es ist selbstverständlich, daß ein ISDN-Netz mehrere Netzabschlußeinrichtungen 10 und mehrere Vermittlungssysteme 30 umfaßt, die über verdrillte Zweidraht-Leitungen untereinander verbunden sein können. In Zukunft werden die herkömmlichen Zweidraht-Leitungen beispielsweise durch Glasfaser-Kabel ergänzt und ersetzt.Die Vermittlungseinrichtung 30 enthält mehrere Baugruppen 80 (in Fig. 1 ist lediglich eine anschlußspezifische Baugruppe 80 dargestellt), die je einem bestimmten Teilnehmeranschluß-Inhaber zugeordnet sind. Gemäß der ersten erfindungsgemäßen Ausführungsform ist eine Sicherheits-Einrichtung 60, 70 in jeder anschlußspezifischen Baugruppe 80 angeordnet. Wie die teilnehmerseitige Sicherheitseinrichtung 40, 50 umfaßt die Sicherheitseinrichtung 60, 70 in der Vermittlungsstell 30 ein in der Baugruppe 80 fest installierbares Modul 60 und einen darin einsetzbaren Identitätsträger 70. Es sei angenommen, daß der Identitätsträger 70 in der Vermittlungseinrichtung 30 ebenfalls den individuellen kryptographischen Schlüssel der teilnehmerseitigen Sicherheits-Einrichtung 40, 50 enthält.

In Fig. 2 ist eine alternative Ausführungsform dargestellt, bei der eine Zusatzeinrichtung 100 zwischen die Netzabschlußeinrichtung 10 und die Vermittlungseinrichtung 30 geschaltet ist. Der besseren Übersichtlichkeit wegen zeigt Fig. 2 die Zusatzeinrichtung 100 nur mit der eingebauten Sicherheits-Einrichtung 60, 70. Normalerweise sind in der Zusatzeinrichtung 100 alle Sicherheits-Einrichtungen 60, 70 installiert, die den Teilnehmern oder Netzabschlußeinrichtungen zugeordnet sind, die allesamt von der Vermittlungsscelle 30 bedient werden. Die Anschlußleitungen sind hierzu in den Fig. 1 und 2 angedeutet. Wiederum können die Identitätsträger 70 als Chipkarte von außen von einer Bedienperson eingeführt werden, oder aber bereits bei der Implementierung als Software-Modul in das jeweilige Sicherheits-Modul 60 eingesetzt werden. Der Einsatz der Zusatzeinrichtung 100 hat den Vorteil, daß bereits vorhandene Vermittlungsstellen des ISDN-Netzes weiterhin benutzt werden können, ohne zeitaufwendige, teure und komplizierte Änderungen an den Vermittlungssystemen vornehmen zu müssen, um eine verschlüsselte Übertragung von vertraulichen Informationen beispielsweise des Teilnehmers des Fernsprechapparates 20 zur Vermittlungseinrichtung 30 durchführen zu können.

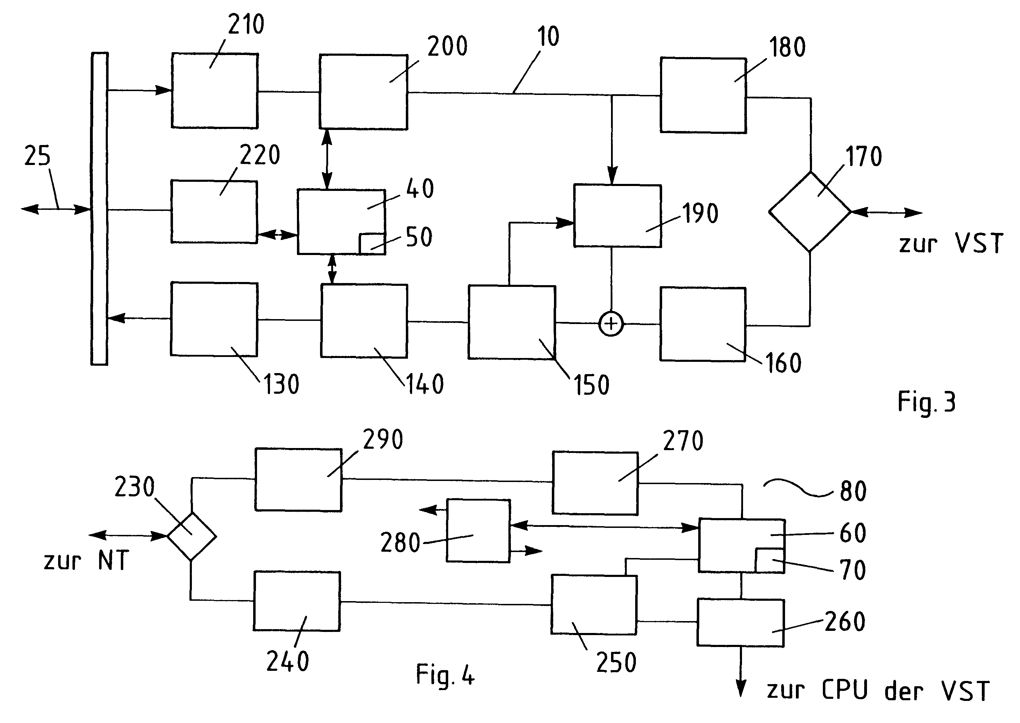

Fig. 3 zeigt ein vereinfachtes Blockschaltbild der bekannten Netzabschlußeinrichtung 10, in die das erfindungsgemäße Sicherheits-Modul 40 zusammen mit dem Identitätsträger 50 installiert ist. Teilnehmerseitig besitzt die Netzabschlußeinrichtung 10 eine Anschlußeinheit für den S₀-Bus 25, an den bis zu acht Datenendeinrichtungen 20 anschließbar sind. Da der Aufbau und die Funktionsweise der Netzabschlußeinrichtung 10 allgemein bekannt ist, werden nachfolgend nur die wesentlichen Baugruppen kurz erläutert. Grundsätzlich weist die Netzabschlußeinrichtung 10 einen Sendepfad und einen Empfangspfad auf. Der Sendepfad umfaßt einen Codierer 210, der unter anderem die im D-Kanal des ISDN-Netzes zu übertragenden vertraulichen Informationen einem Verschlüsseler in der Sicherheits-Einrichtung 40, 50 zuführt, einen Multiplexer 200, der die Aufgabe hat, die beiden B-Kanäle und den D-Kanal im Zeitmultiplexverfahren zu einem zusammenhängenden Datenstrom zusammenzusetzen. Ein entsprechendes Rahmenformat besteht aus 48 Bits pro 250 ms, wobei lediglich vier D-Kanalbits pro Rahmen vorgesehen sind. Mit anderen Worten werden über den D-Kanal 16 kBit/s übertragen (s. Fig. 5). Der Sendepfad verläuft danach nacheinander über einen Sender 180 zu einem Gabelumschalter 170, der den abgehenden Datenstrom auf eine Zweidrahtleitung gibt, die die Vermittlungsstelle 30 mit der Netzabschlußeinrichtung 10 verbindet. Ankommende Datenströme durchlaufen die Gabelschaltung 170, einen Empfänger 160 und eine Einrichtung 150, die den empfangenen Datenstrom entzerrt, verstärkt und aus diesem das Taktsignal rückgewinnt. Als nächstes durchläuft der Datenstrom einen Demultiplexer 140, der den Datenstrom wieder in die beiden B-Kanäle und den D-Kanal zerlegt. Der demultiplexierte Datenstrom durchläuft einen Decodierer 130 und wird anschließend entsprechend einer Zieladresse über den S₀-Bus 25 beispielsweise zu dem Fernsprechapparat 20 übertragen. Eine Echokompensation 190, die parallel zwischen den Sender 180 und den Empfänger 160 geschaltet ist, dient unter anderem dazu, abgehende Nachrichten, die über den Gabelumschalter 170 und den Empfänger 160 dem Empfangspfad zugeführt werden, zu kompensieren. Das Herzstück der Netzabschlußeinrichtung 10 ist eine Steuereinheit 220, die die Verwaltung und Steuerung der einzelnen Baugruppen miteinander steuert. Das erfindungsgemäße Sicherheits-Modul 40 mit dem eingesetzten Identitätsträger 50 ist beispielsweise mit der Steuereinheit 220, dem Codierer 210, dem Multiplexer 200, dem Demultiplexer 140 und dem Decodierer 130 verbunden. Die Steuereinheit 220 hat ferner die Aufgabe, die Sicherheits-Einrichtung 40, 50 je nach Situation zu aktivieren oder zu deaktivieren.

In Fig. 4 ist beispielsweise das vereinfachte Blockschaltbild einer teilnehmerspezifischen Baugruppe 80 dargestellt, die in der Vermittlungseinrichtung 30 installiert ist. Die anschlußspezifische Baugruppe 80 bildet im wesentlichen das Gegenstück zu der Netzabschlußeinrichtung 10. Ankommende Datennachrichten gelangen über die Zweidraht-Leitung zu einem Gabelumschalter 230 und durchlaufen anschließend einen Demultiplexer 240, einen Decoder 250 und einen D-Kanal-Händler 260. Der D-Kanal-Händler 260 versorgt eine zentrale Steuereinheit der Vermittlungseinrichtung 30 mit den entsprechenden Steuerinformationen. In umgekehrter Richtung laufen abgehende Nachrichten über einen Codierer 270, einen Multiplexer 290, den Gabelumschalter 230 und über die Zweidraht-Leitung zur Netzabschlußeinrichtung 10. Auch in der anschlußspezifischen Baugruppe 80 übernimmt eine Steuereinheit 280 die Verwaltung und das Zusammenspiel der einzelnen Bauelemente. Erfindungsgemäß ist das Sicherheits-Modul 60 mit einer von außen einführbaren Chipkarte oder einem eingesetzten Software-Modul 70 in der anschlußspezifischen Baugruppe 80 installiert. Die Sicherheitseinrichtung 60, 70, die das Sicherheits-Modul 60 und den Identitätsträger 70 umfaßt, ist wiederum mit dem Codierer 270, dem Decoder 250, dem D-Kanalhändler 260 und der Steuereinheit 280 verbunden. Wie bereits erwähnt, kann die Sicherheits-Einrichtung 60, 70 vorteilhafterweise auch in der Zusatzeinrichtung 110 installiert sein, wie dies in Fig. 2 dargestellt ist.

Es ist zwar zweckmäßig, die Sicherheits-Einrichtung 40, 50 in der Netzabschlußeinrichtung 10 selbst unterzubringen, da auf diese Weise unabhängig von der Anzahl der angeschlossenen Datenendeinrichtungen 20 lediglich eine einzige Sicherheits-Einrichtung 40, 50 erforderlich ist. Allerdings ist es auch denkbar, die teilnehmerseitige Sicherheits-Einrichtung 40, 50 in jeder Datenendeinrichtung 20 anzuordnen. Eine weitere Alternative besteht darin, zwischen die Netzabschlußeinrichtung 10 und jedes angeschlossene Datenendgerät 20 eine nicht dargestellte Sicherheits-Einrichtung vorzusehen. Aus wirtschaftlichen Gründen ist es allerdings zweckmäßig, die Sicherheits-Einrichtungen 40, 50, wie in Fig. 1 dargestellt, in der Netzabschlußeinrichtung 10 selbst zu installieren. Der Identitätsträger. 50 kann in Form eines Software-Moduls von dem Netzbetreiber bei der Installation der Netzabschlußeinrichtung 10 bei dem Teilnehmer eingesetzt werden. Handelt es sich bei dem Identitätsträger 50 um eine Chipkarte, so kann der Teilnehmer diese Chipkarte, die seinen individuellen Teilnehmerschlüssel enthält, z.B. beim Netzbetreiber erwerben.

Es wird nunmehr detaillierter die Übertragung von vertraulichen Verbindungsaufbau- und/oder Serviceinformationen zwischen dem Fernsprechapparat 20 und der Vermittlungsstelle 30 beschrieben.

Es sei angenommen, daß eine teilnehmerseitige Sicherheits-Einrichtung 40, 50 in der Netzabschlußeinrichtung 10 und eine zweite Sicherheits-Einrichtung 60, 70 in der dem Teilnehmer des Fernsprechapparates 20 zugeordneten Baugruppe 80 der Vermittlungsstelle 30 installiert sind. Gemäß der in Fig. 2 gezeigten Ausführungsform kann die Sicherheits-Einrichtung 60, 70 auch in der Zusatzeinrichtung 100 installiert sein. Die nachfolgend beschriebenen Verfahren laufen für beide Ausführungsformen im wesentlichen in gleicher Weise ab.

Es sei weiter angenommen, daß der teilnehmerseitige Identitätsträger 50 und der vermittlungsseitige Identitätsträger 70 die gleiche Kennung, d.h. die Identität des Teilnehmers des Fernsprechapparates 20, besitzen. Darüber hinaus verfügen die teilnehmerseitige Sicherheits-Einrichtung 40, 50 und die vermittlungsseitige Sicherheits-Einrichtung 60, 70 über den gleichen, auf den Teilnehmer des Fernsprechapparates 20 bezogenen kryptographischen Schlüssel. Beide Identitätsträger 50, 70 seien Chipkarten.

Nachdem die Sicherheitseinrichtung 40, 50 den Teilnehmer des Fernsprechapparates 20 gegenüber der Vermittlungsstelle 30 in Verbindung mit der in der teilnehmerspezifischen Baugruppe 80 installierten Sicherheitseinrichtung 60, 70 authentisiert hat - die Authentisierung kann auch durch separate Authentisierungseinrichtungen durchgeführt werden - werden alle Verbindungsaufbau- und Serviceinformationen von der teilnehmerseitigen Sicherheits-Einrichtung 40, 50 mit dem teilnehmerbezogenen Schlüssel verschlüsselt und in dem D-Kanal über das ISDN-Netz zur Sicherheitseinrichtung 60, 70 in der teilnehmerspezifischen Baugruppe übertragen. Die Sicherheits-Einrichtung 60, 70 in der Vermittlungsstelle 30 entschlüsselt die empfangenen verschlüsselten Verbindungsaufbau- und/oder Serviceinformationen mit dem gemeinsamen teilnehmerbezogenen Schlüssel und sendet die entschlüsselten Informationen über den D-Kanal-Händler an eine Zentraleinheit der Vermittlungsstelle 30. Unter Ansprechen auf die entschlüsselten Verbindungsaufbauinformationen wird die gewünschte Verbindung zu dem gerufenen Teilnehmer aufgebaut und die angeforderten Dienste unter Ansprechen auf die entschlüsselten Serviceinformationen zur Verfügung gestellt. Auf diese Weise wird sichergestellt, daß ein nichtberechtigter Angreifer keine Verbindung zu einem anderen Teilnehmer auf Kosten des Anschlußinhabers des Fernsprechapparates 20 aufbauen kann. Für die Ver- und Entschlüsselung können die unterschiedlichsten bekannten Verschlüsselungsverfahren eingesetzt und benutzt werden. Dies ist beispielsweise das Riwest-Shamir-Adlerman-Verfahren oder das Data-Encryption-Standard-Verfahren.

Es sei nunmehr angenommen, daß in der teilnehmerspezifischen Baugruppe 80 anstelle der Chipkarte ein spezielles Ver- und Entschlüsselungsmodul 70 installiert ist. Bevor nun die vertraulichen Verbindungsaufbau- und Serviceinformationen verschlüsselt und über das ISDN-Netz zur Vermittlungsstelle 30 übertragen werden können, wird das Entschlüsselungsmodul 70 von einer zentralen oder dezentralen Schlüsselzentrale mit dem dem Teilnehmer des Fernsprechapparats 20 zugeordneten Schlüssel versorgt. Der Schlüssel kann entweder mittels eines Datenträgers, beispielsweise einer Diskette, oder durch eine elektronische Datenübertragung zur Sicherheitseinrichtung 60, 70 übertragen werden. Dabei sind besondere, auf dem Gebiet der vertraulichen und authentischen Informationsübertragung wichtige und bekannte Sicherheitsaspekte zu berücksichtigen, denn der teilnehmerspezifische Schlüssel darf einem nichtauthorisierten Dritten nicht bekannt werden. Nachdem die Sicherheitseinrichtung 60, 70 der Baugruppe 80 den teilnehmerspezifischen, kryptographischen Schlüssel empfangen hat, werden die vertraulichen Verbindungsaufbau- und Serviceinformationen gemäß dem oben beschriebenen Verfahren übertragen.

Eine vorteilhafte Weiterbildung der Erfindung sieht vor, daß der Steuerkanal (D-Kanal) des digitalen Kommunikationsnetzes als Übertragungsleitung für Daten einer Benutzer-zu-Benutzer-Übertragung fungiert, und zwar zwischen dem Datenendgerät 20 und der Vermittlungsstelle 30. In diesem Fall ist die teilnehmerseitige Sicherheitseinrichtung 40, 50 in der Lage, die beispielsweise von einem Personalcomputer abgehenden Daten zu verschlüsseln und zur der Vermittlungsstelle 30 zugeordneten Sicherheitseinrichtung 60, 70 verschlüsselt zu übertragen. Die Sicherheitseinrichtung 60, 70, die in der teilnehmerspezifischen Baugruppe 80 oder in der Zusatzeinrichtung 100 installierbar ist, kann diese Dateninformationen entschlüsseln und sie in Verbindung mit der Vermittlungsstelle 30 beispielsweise über das Datex-P-Netz zu einem gerufenen Teilnehmer übertragen.

## Patentansprüche

1. Verfahren zur Übermittlung von vertraulichen und authentischen Verbindungsaufbau- und/oder ServiceInformationen zwischen teilnehmerseitigen Datenendeinrichtungen (20) und einer oder mehreren Vermittlungsstellen (30) eines digitalen Kommunikationsnetzes mit
wenigstens einer teilnehmerseitigen Netzabschlußeinrichtung (10), an die wenigstens eine Datenendeinrichtung (20) anschaltbar ist, wenigstens einer ersten, bei einem Teilnehmer angeordneten Sicherheitseinrichtung (40, 50) und wenigstens einer zweiten, der Vermittlungsstelle (30) zugeordneten Sicherheitseinrichtung (60, 70), mit folgenden Verfahrensschritten:
Ver- und/oder Entschlüsseln der Verbindungsaufbau- und/oder Serviceinformationen durch die teilnehmerseitige erste Sicherheitseinrichtung (40, 50), Übertragen der verschlüsselten Verbindungsaufbau- und/oder Serviceinformationen zwischen der ersten (40, 50) und der zweiten Sicherheitseinrichtung (60, 70) über einen gesonderten Steuerkanal des digitalen Kommunikationsnetzes,
Ver- und/oder Entschlüsseln der Verbindungsaufbau- und/oder Serviceinformationen durch die zweite Sicherheitseinrichtung (60, 70).

2. Verfahren nach Anspruch 1,
**dadurch gekennzeichnet,**
**daß** die von der zweiten Sicherheitseinrichtung (60, 70) entschlüsselten Verbindungsaufbau- und/oder Serviceinformationen an eine Zentraleinheit der entsprechenden Vermittlungsstelle (30) gesendet werden, die unter Ansprechen auf die Verbindungsaufbau- und/oder Serviceinformationen eine Verbindung zu einem gerufenen Teilnehmer aufbaut und/oder die angeforderten Dienste bereitstellt.

3. Verfahren zur Übermittlung von vertraulichen Verbindungsaufbau- und/oder Serviceinformationen nach Anspruch 1 oder 2,
**dadurch gekennzeichnet,**
**daß** die Verbindungsaufbau- und/oder Serviceinformationen von der ersten (40, 50) und der zweiten Sicherheitseinrichtung (60, 70) mit einem gleichen, teilnehmerspezifischen Schlüssel ver- und/oder entschlüsselt werden.

4. Verfahren zur Übermittlung von vertraulichen Verbindungsaufbau- und/oder Serviceinformationen nach einem der Ansprüche 1 bis 3,
**dadurch gekennzeichnet,**
**daß** vor der Übertragung von vertraulichen Verbindungsaufbau- und/oder Serviceinformationen eine Authentisierung zwischen dem Teilnehmer der Netzabschlußeinrichtung (10) und der zugeordneten Vermittlungsstelle (30) von der ersten (40, 50) und der zweiten Sicherheitseinrichtung (60, 70) oder von gesonderten Authentisierungs-Einrichtungen durchgeführt wird.

5. Verfahren zur Übermittlung von vertraulichen Verbindungsaufbau- und/oder Serviceinformationen nach einem der Ansprüche 1 bis 4,
**dadurch gekennzeichnet,**
**daß** die Verbindungsaufbau- und/oder Serviceinformationen über den D-Kanal eines ISDN-Netzes übertragen werden.

6. Vorrichtung zur Übertragung von vertraulichen und authentischen Verbindungsaufbau- und/oder Serviceinformationen zwischen teilnehmerseitigen Datenendeinrichtungen (20) und einer oder mehreren Vermittlungsstellen (30) eines digitalen Kommunikationsnetzes mit wenigstens einer teilnehmerseitigen Netzabschlußeinrichtung (10), an die wenigstens eine Datenendeinrichtung (20) anschließbar ist,
**dadurch gekennzeichnet,**
**daß** wenigstens bei einem Teilnehmer wenigstens eine erste Sicherheitseinrichtung (40, 50) angeordnet ist, daß wenigstens in der Vermittlungsstelle (30) wenigstens eine zweite Sicherheitseinrichtung (60, 70) angeordnet ist, wobei die erste (40, 50) und die zweite Sicherheitseinrichtung (60, 70) Verbindungsaufbau- und/oder Serviceinformationen des Teilnehmers ver- und/oder entschlüsseln und untereinander über einen gesonderten Steuerkanal des digitalen Kommunikationsnetzes austauschen können.

7. Vorrichtung zur Übertragung von vertraulichen Verbindungsaufbau- und/oder Serviceinformationen nach Anspruch 6,
**dadurch gekennzeichnet,**
**daß** die Vermittlungsstelle (30) mehrere, je einem bestimmten Teilnehmer zugeordnete Baugruppen (80) enthält, in denen jeweils eine zweite Sicherheitseinrichtung (60, 70) angeordnet ist.

8. Vorrichtung zur Übertragung von vertraulichen Verbindungsaufbau- und/oder Serviceinformationen zwischen teilnehmerseitigen Datenendeinrichtungen (20) und einer oder mehreren Vermittlungsstellen (30) eines digitalen Kommunikationsetzes mit wenigstens einer teilnehmerseitigen Netzabschlußeinrichtung (10), an die wenigstens eine Datenendeinrichtung (20) anschließbar ist,
**dadurch gekennzeichnet,**
**daß** wenigstens bei einem Teilnehmer wenigstens eine erste Sicherheitseinrichtung (40, 50) angeordnet ist, daß der oder jeder Vermittlungsstelle (30) eine Zusatzeinrichtung (100) vorgeschaltet ist, in der wenigstens eine zweite Sicherheitseinrichtung (60, 70) angeordnet ist, wobei die erste (40, 50) und die zweite Sicherheitseinrichtung (60, 70) Verbindungsaufbau- und/oder Serviceinformationen des Teilnehmers ver- und/oder entschlüsseln und untereinander über einen gesonderten Steuerkanal des digitalen Kommunikationsnetzes austauschen können.

9. Vorrichtung zur Übertragung von vertraulichen Verbindungsaufbau- und/oder Serviceinformationen nach einem der Ansprüche 6 bis 8,
**dadurch gekennzeichnet,**
**daß** die Sicherheitseinrichtungen jeweils ein Sicherheitsmodul (40, 60) aufweisen, das einen Identitätsträger (50; 70) aufnehmen kann.

10. Vorrichtung zur Übertragung von vertraulichen Verbindungsaufbau- und/oder Serviceinformationen nach einem der Ansprüche 6 bis 9,
**dadurch gekennzeichnet,**
**daß** die erste Sicherheitseinrichtung (40, 50) in der Netzabschlußeinrichtung (10) angeordnet ist.

11. Vorrichtung zur Übertragung von vertraulichen Verbindungsaufbau- und/oder Serviceinformationen nach einem der Ansprüche 6 bis 9,
**dadurch gekennzeichnet,**
**daß** in jeder, an die Netzabschlußeinrichtung (10) anschließbaren Datenendeinrichtung (20) eine erste Sicherheitseinrichtung (40, 50) angeordnet ist.

12. Vorrichtung zur Übertragung von vertraulichen Verbindungsaufbau- und/oder Serviceinformationen nach einem der Ansprüche 6 bis 9,
**dadurch gekennzeichnet,**
**daß** zwischen jeder Datenendeinrichtung und der zugeordneten Netzabschlußeinrichtung (10) eine erste Sicherheitseinrichtung (40, 50) geschaltet ist.

13. Vorrichtung zur Übertragung von vertraulichen Verbindungsaufbau- und/oder Serviceinformationen nach einem der Ansprüche 6 bis 12,
**dadurch gekennzeichnet,**
**daß** das digitale Kommunikationsnetz ein ISDN-Netz ist und die Übertragung der verschlüsselten Informationen zwischen der ersten (40, 50) und der zweiten Sicherheitseinrichtung (60, 70) über den D-Kanal des ISDN-Netzes erfolgt.

14. Vorrichtung zur Übertragung von vertraulichen Verbindungsaufbau- und/oder Serviceinformationen nach einem der Ansprüche 9 bis 13,
**dadurch gekennzeichnet,**
**daß** die Identitätsträger (50, 70) eine Chipkarte oder ein Software-Modul sind, die die vertraulichen Informationen ver- und/oder entschlüsseln können.

15. Vorrichtung zur Übertragung von vertraulichen Verbindungsaufbau- und/oder Serviceinformationen nach einem der Ansprüche 6 bis 14,
**dadurch gekennzeichnet,**
**daß** die jeweils einem bestimmten Teilnehmer zugeordnete erste (40, 50) und zweite Sicherheitseinrichtung (60, 70), dieselbe teilnehmerbezogene Identität besitzen und mit einem gleichen, teilnehmerspezifischen Schlüssel die vertraulichen Informationen ver- und/oder entschlüsseln.

16. Vorrichtung zur Übertragung von vertraulichen Verbindungsaufbau- und/oder Serviceinformationen nach einem der Ansprüche 6 bis 15,
**dadurch gekennzeichnet,**
**daß** die erste (40, 50) und die zweite (60, 70), einem bestimmten Teilnehmer zugeordnete Sicherheitseinrichtung alle über den Steuerkanal des digitalen Kommunikationsnetzes übertragenen Daten ver- und/oder entschlüsseln können.

## Claims

1. Method for transmitting confidential and authentic connection set-up and/or service information between subscriber-end data terminals (20) and one or more switching centres (30) in a digital communication network having
at least one subscriber-end network terminating device (10) to which at least one data terminal (20) can be connected,
at least one first security device (40, 50), arranged with a subscriber, and
at least one second security device (60, 70), associated with the switching centre (30), having the following method steps:
the connection set-up and/or service information is encrypted and/or decrypted by the subscriber-end first security device (40, 50),
the encrypted connection set-up and/or service information is transmitted between the first security device (40, 50) and the second security device (60, 70) via a separate control channel in the digital communication network,
the connection set-up and/or service information is encrypted and/or decrypted by the second security device (60, 70).

2. Method according to Claim 1,
**characterized**
**in that** the connection set-up and/or service information decrypted by the second security device (60, 70) is sent to a central unit for the appropriate switching centre (30), which sets up a connection to a called subscriber and/or provides the demanded services in response to the connection set-up and/or service information.

3. Method for transmitting confidential connection set-up and/or service information according to Claim 1 or 2,
**characterized**
**in that** the connection set-up and/or service information is encrypted and/or decrypted by the first security device (40, 50) and the second security device (60, 70) using the same, subscriber-specific key.

4. Method for transmitting confidential set-up and/or service information according to one of Claims 1 to 3,
**characterized**
**in that**, before confidential connection set-up and/or service information is transmitted, authentication between the subscriber of the network terminating device (10) and the associated switching centre (30) is carried out by the first security device (40, 50) and the second security device (60, 70) or by separate authentication devices.

5. Method for transmitting confidential connection set-up and/or service information according to one of Claims 1 to 4,
**characterized**
**in that** the connection set-up and/or service information is transmitted via the D-channel in an ISDN network.

6. Apparatus for transmitting confidential and authentic connection set-up and/or service information between subscriber-end data terminals (20) and one or more switching centres (30) in a digital communication network having
at least one subscriber-end network terminating device (10) to which at least one data terminal (20) can be connected,
**characterized**
**in that** at least one first security device (40, 50) is arranged at least with one subscriber,
**in that** at least one second security device (60, 70) is arranged at least in the switching centre (30), the first security device (40, 50) and the second security device (60, 70) being able to encrypt and/or decrypt connection set-up and/or service information for the subscriber and to exchange it among one another via a separate control channel in the digital communication network.

7. Apparatus for transmitting confidential connection set-up and/or service information according to Claim 6,
**characterized**
**in that** the switching centre (30) contains a plurality of assemblies (80) which are each associated with one particular subscriber and in which a respective second security device (60, 70) is arranged.

8. Apparatus for transmitting confidential connection set-up and/or service information between subscriber-end data terminals (20) and one or more switching centres (30) in a digital communication network having
at least one subscriber-end network terminating device (10) to which at least one data terminal (20) can be connected,
**characterized**
**in that** at least one first security device (40, 50) is arranged at least with one subscriber,
**in that** the or each switching centre (30) has a supplementary device (100) connected upstream of it in which at least one second security device (60, 70) is arranged, the first security device (40, 50) and the second security device (60, 70) being able to encrypt and/or decrypt connection set-up and/or service information for the subscriber and to exchange it among one another via a separate control channel in the digital communication network.

9. Apparatus for transmitting confidential connection set-up and/or service information according to one of Claims 6 to 8,
**characterized**
**in that** the security devices have a respective security module (40, 60) which can hold an identity medium (50; 70).

10. Apparatus for transmitting confidential connection set-up and/or service information according to one of Claims 6 to 9,
**characterized**
**in that** the first security device (40, 50) is arranged in the network terminating device (10).

11. Apparatus for transmitting confidential connection set-up and/or service information according to one of Claims 6 to 9,
**characterized**
**in that** a first security device (40, 50) is arranged in each data terminal (20), which can be connected to the network terminating device (10).

12. Apparatus for transmitting confidential connection set-up and/or service information according to one of Claims 6 to 9,
**characterized**
**in that** a first security device (40, 50) is connected between each data terminal and the associated network terminating device (10).

13. Apparatus for transmitting confidential connection set-up and/or service information according to one of claims 6 to 12,
**characterized**
**in that** the digital communication network is an ISDN network and the encrypted information is transmitted between the first security device (40, 50) and the second security device (60, 70) via the D-channel in the ISDN network.

14. Apparatus for transmitting confidential connection set-up and/or service information according to one of Claims 9 to 13,
**characterized**
**in that** the identity media (50, 70) are a smart card or a software module which can encrypt and/or decrypt the confidential information.

15. Apparatus for transmitting confidential connection set-up and/or service information according to one of Claims 6 to 14,
**characterized**
**in that** the first security device (40, 50) and the second security device (60, 70), respectively associated with a particular subscriber, have the same subscriber-related identity and use the same, subscriber-specific key to encrypt and/or decrypt the confidential information.

16. Apparatus for transmitting confidential connection set-up and/or service information according to one of Claims 6 to 15,
**characterized**
**in that** the first security device (40, 50) and the second security device (60, 70), associated with a particular subscriber, can encrypt and/or decrypt all data transmitted via the control channel in the digital communication network.

## Revendications

1. Procédé pour la transmission d'informations confidentielles et authentiques d'établissement de connexion et/ou de service entre des terminaux d'abonné (20) et un ou plusieurs centres de commutation (30) d'un réseau de communication numérique avec au moins un dispositif de terminaison de réseau d'abonné (10) auquel peut être raccordé au moins un terminal (20), au moins un premier dispositif de sécurité (40, 50) installé chez un abonné et au moins un deuxième dispositif de sécurité (60, 70) associé au centre de commutation (30), avec les étapes suivantes du procédé :
cryptage et/ou décryptage des informations d'établissement de connexion et/ou de service par le premier dispositif de sécurité d'abonné (40, 50),
transmission des informations cryptées d'établissement de connexion et/ou de service entre le premier (40, 50) et le deuxième dispositif de sécurité (60, 70) par le biais d'un canal de commande spécial du réseau de communication numérique,
Cryptage et/ou décryptage des informations cryptées d'établissement de connexion et/ou de service par le deuxième dispositif de sécurité (60, 70).

2. Procédé selon la revendication 1, **caractérisé en ce que** les informations d'établissement de connexion et/ou de service décryptées par le deuxième dispositif de sécurité (60, 70) sont envoyées à une unité centrale du centre de commutation (30) correspondant qui établit une connexion avec l'abonné appelant et/ou met à disposition les services demandés.

3. Procédé pour la transmission d'informations confidentielles d'établissement de connexion et/ou de service selon la revendication 1 ou 2, **caractérisé en ce que** les informations d'établissement de connexion et/ou de service sont cryptés et/ou décryptées par le premier (40, 50) et le deuxième dispositif de sécurité (60, 70) avec la même clé spécifique à l'abonné.

4. Procédé pour la transmission d'informations confidentielles d'établissement de connexion et/ou de service selon l'une des revendications 1 à 3,
**caractérisé en ce qu'**une authentification de l'abonné du dispositif de terminaison de réseau (10) et du centre de commutation (30) associé est effectuée par le premier (40, 50) et le deuxième dispositif de sécurité (60, 70) ou par des dispositifs d'authentification spéciaux avant la transmission des informations confidentielles d'établissement de connexion et/ou de service.

5. Procédé pour la transmission d'informations confidentielles d'établissement de connexion et/ou de service selon l'une des revendications 1 à 4,
**caractérisé en ce que** les informations d'établissement de connexion et/ou de service sont transmises sur le canal D d'un réseau RNIS.

6. Dispositif pour la transmission d'informations confidentielles et authentiques d'établissement de connexion et/ou de service entre des terminaux d'abonné (20) et un ou plusieurs centres de commutation (30) d'un réseau de communication numérique avec au moins un dispositif de terminaison de réseau d'abonné (10) auquel peut être raccordé au moins un terminal (20),
**caractérisé en ce**
**qu'**au moins un premier dispositif de sécurité (40, 50) est installé chez au moins un abonné,
**qu'**au moins un deuxième dispositif de sécurité (60, 70) est installé au moins dans le centre de commutation (30), le premier (40, 50) et le deuxième dispositif de sécurité (60, 70) pouvant crypter et/ou décrypter des
informations d'établissement de connexion et/ou de service de l'abonné et les échanger entre eux par le biais d'un canal de commande spécial du réseau de communication numérique.

7. Dispositif pour la transmission d'informations confidentielles d'établissement de connexion et/ou de service selon la revendication 6, **caractérisé en ce que** le centre de commutation (30) contient plusieurs modules (80) associés chacun à un abonné spécifique, dans lesquels est à chaque fois disposé un deuxième dispositif de sécurité (60, 70).

8. Dispositif pour la transmission d'informations confidentielles d'établissement de connexion et/ou de service entre des terminaux d'abonné (20) et un ou plusieurs centres de commutation (30) d'un réseau de communication numérique avec au moins un dispositif de terminaison de réseau d'abonné (10) auquel peut être raccordé au moins un terminal (20), **caractérisé en ce**
**qu'**au moins un premier dispositif de sécurité (40, 50) est installé chez au moins un abonné,
**qu'**un dispositif supplémentaire (100) dans lequel est disposé au moins un deuxième dispositif de sécurité (60, 70) est branché avant le ou chaque centre de commutation (30), le premier (40, 50) et le deuxième dispositif de sécurité (60, 70) pouvant crypter et/ou décrypter des informations d'établissement de connexion et/ou de service de l'abonné et les échanger entre eux par le biais d'un canal de commande spécial du réseau de communication numérique.

9. Dispositif pour la transmission d'informations confidentielles d'établissement de connexion et/ou de service selon l'une des revendications 6 à 8,
**caractérisé en ce que** les dispositifs de sécurité comprennent chacun un module de sécurité (40, 60) qui peut recevoir un support d'identité (50, 70).

10. Dispositif pour la transmission d'informations confidentielles d'établissement de connexion et/ou de service selon l'une des revendications 6 à 9,
**caractérisé en ce que** le premier dispositif de securite (40, 50) est disposé dans le dispositif de terminaison de réseau (10).

11. Dispositif pour la transmission d'informations confidentielles d'établissement de connexion et/ou de service selon l'une des revendications 6 à 9,
**caractérisé en ce qu'**un premier dispositif de sécurité (40, 50) est disposé dans chaque terminal (20) pouvant être raccordé dans le dispositif de terminaison de réseau (10).

12. Dispositif pour la transmission d'informations confidentielles d'établissement de connexion et/ou de service selon l'une des revendications 6 à 9,
**caractérisé en ce qu'**un premier dispositif de sécurité (40, 50) est branché entre chaque terminal et le dispositif de terminaison de réseau (10) associé.

13. Dispositif pour la transmission d'informations confidentielles d'établissement de connexion et/ou de service selon l'une des revendications 6 à 12,
**caractérisé en ce que** le réseau de communication numérique est un réseau RNIS et que la transmission des informations cryptées entre le premier (40, 50) et le deuxième dispositif de sécurité (60, 70) s'effectue sur le canal D du réseau RNIS.

14. Dispositif pour la transmission d'informations confidentielles d'établissement de connexion et/ou de service selon l'une des revendications 9 à 13,
**caractérisé en ce que** les supports d'identité (50, 70) sont une carte à puce ou un module logiciel qui peuvent crypter et/ou décrypter les informations confidentielles.

15. Dispositif pour la transmission d'informations confidentielles d'établissement de connexion et/ou de service selon l'une des revendications 6 à 14,
**caractérisé en ce qu'**un premier (40, 50) et deuxième dispositif de sécurité (60, 70) associés chacun à un abonné donné possèdent la même identité relative à l'abonné et cryptent et/ou décryptent les informations confidentielles avec la même clé spécifique à l'abonné.

16. Dispositif pour la transmission d'informations confidentielles d'établissement de connexion et/ou de service selon l'une des revendications 6 à 15,
caractérisé en ce le premier (40, 50) et le deuxième dispositif de sécurité (60, 70) associés à un abonné donné peuvent chacun crypter et/ou décrypter les données transmises par le biais du canal de commande du réseau de communication numérique.
